(19)

**Europäisches Patentamt**
**European Patent Office**
**Office européen des brevets**

(11)  **EP 4 080 613 B1**

(12)  **EUROPEAN PATENT SPECIFICATION**

(45) Date of publication and mention
of the grant of the patent:
**24.09.2025  Bulletin 2025/39**

(21) Application number: **20902839.8**

(22) Date of filing: **18.12.2020**

(51) International Patent Classification (IPC):
$H01M\ 4/525$ (2010.01)    $H01M\ 4/505$ (2010.01)
$H01M\ 10/052$ (2010.01)    $C01G\ 53/00$ (2025.01)

(52) Cooperative Patent Classification (CPC):
**C01G 53/82; C01G 53/50; H01M 4/131; H01M 4/36;
H01M 4/364; H01M 4/505; H01M 4/525;
H01M 10/052; H01M 10/0525;** C01P 2002/20;
C01P 2002/52; C01P 2002/60; C01P 2002/74;
C01P 2002/77; C01P 2002/88;          (Cont.)

(86) International application number:
**PCT/KR2020/018716**

(87) International publication number:
**WO 2021/125898 (24.06.2021 Gazette 2021/25)**

(54) **CATHODE ACTIVE MATERIAL AND LITHIUM SECONDARY BATTERY COMPRISING SAME**

KATHODENAKTIVMATERIAL UND LITHIUMSEKUNDÄRBATTERIE DAMIT

MATÉRIAU ACTIF DE CATHODE ET PILE RECHARGEABLE AU LITHIUM LE COMPRENANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **20.12.2019  KR 20190172337**

(43) Date of publication of application:
**26.10.2022  Bulletin 2022/43**

(73) Proprietors:
• **POSCO Holdings Inc.**
**Seoul 06194 (KR)**
• **RESEARCH INSTITUTE OF INDUSTRIAL
SCIENCE &
TECHNOLOGY
Pohang-si, Gyeongsangbuk-do 37673 (KR)**
• **Posco Future M Co., Ltd.**
**Pohang-si, Gyeongsangbuk-do 37918 (KR)**

(72) Inventors:
• **NAM, Sang Cheol**
**Seoul 02587 (KR)**
• **LEE, Sang Hyuk**
**Incheon 22405 (KR)**
• **CHOI, Kwon Young**
**Seoul 07987 (KR)**
• **SONG, Jung Hoon**
**Gwacheon-si, Gyeonggi-do 13835 (KR)**

(74) Representative: **Pfenning, Meinig & Partner mbB
Patent- und Rechtsanwälte
Theresienhöhe 11a
80339 München (DE)**

(56) References cited:
KR-A- 20100 068 459    KR-A- 20140 008 279
KR-A- 20170 078 709    KR-A- 20180 019 140
KR-B1- 102 007 411

EP 4 080 613 B1

(52) Cooperative Patent Classification (CPC): (Cont.)
C01P 2004/03; C01P 2004/45; C01P 2004/53;
C01P 2004/61; C01P 2004/62; C01P 2006/40;
H01M 2004/021; H01M 2004/028; Y02E 60/10

## Description

### CROSS-REFERENCE TO RELATED APPLICATION

This application claims priority to and the benefit of Korean Patent Application No. 10-2019-0172337 filed in the Korean Intellectual Property Office on December 20, 2019.

### BACKGROUND OF THE INVENTION

**(a) Field of the Invention**

It is about a positive electrode active material and a lithium secondary battery containing the same.

**(b) Description of the Related Art**

In recent years, the development of secondary batteries having high-capacity and a high energy density that can be applied thereto is being actively conducted worldwide due to the explosive increase in demand for electric vehicles and the increase in mileage.

Particularly, in order to manufacture such a high-capacity battery, a high-capacity positive electrode active material should be used. Therefore, as a high-capacity positive electrode active material, a method of applying a nickel-cobalt manganese-based positive electrode active material with a high nickel content has been proposed.

However, nickel-cobalt-manganese based positive active material with a high nickel content has a problem in that the decomposition temperature is lowered when the temperature in the charged state increases due to the increase in structural instability according to the increase in the nickel content.

Therefore, it is necessary to improve the structural stability of the nickel cobalt manganese-based positive electrode active material with a high nickel content. Accordingly, it is necessary to develop a positive electrode active material with excellent cycle-life and resistance characteristics and excellent thermal stability while securing excellent capacity.

KR 102 007 411 B1 discloses a positive active material positive electrode and lithium battery. KR 2010 0068459 A discloses a positive electrode active material.

### SUMMARY OF THE INVENTION

In the present exemplary embodiment, a positive electrode including a plurality of domains inside lithium metal oxide particles is provided. Accordingly, it is possible to provide a positive active material with excellent thermal stability while maintaining high capacity while reducing initial resistance and resistance increase rate.

The positive electrode active material for a lithium secondary battery according to an exemplary embodiment includes a lithium metal oxide particle including lithium, nickel, cobalt, manganese and doping elements, and includes a first domain and a second domain inside the lithium metal oxide particle, wherein the first and second domains are regions having separate and independent crystal structures within a primary particle, wherein the doping elements include Zr, Al, Ti and B.

A lithium secondary battery according to another exemplary embodiment may include a positive electrode including a positive electrode active material according to the present exemplary embodiment, a negative electrode, and a non-aqueous electrolyte.

Since the positive electrode active material according to the present exemplary embodiment includes a plurality of domains inside lithium metal oxide particles, the thermal decomposition temperature of the positive electrode active material is increased despite the high nickel content to improve the structural stability of the positive electrode active material.

In addition, when the positive electrode active material of the present exemplary embodiment is applied to a lithium secondary battery, cycle-life and thermal stability can be improved while ensuring high capacity.

In addition, when the positive electrode active material of the present exemplary embodiment is applied, the initial resistance characteristic of the lithium secondary battery is excellent and the resistance increasing rate can be significantly reduced.

### BRIEF DESCRIPTION OF THE DRAWINGS

FIG. 1A shows the cross-section after milling the positive active material manufactured according to exemplary embodiment 1 with FIB.

FIG. 1B is the result of obtaining the SAED (Selected Area Diffraction Pattern) pattern for area 1 in FIG. 1A.

FIG. 1C is the result of obtaining the SAED (Selected Area Diffraction Pattern) pattern for area 1 in FIG. 1A.

FIG. 2A shows the cross-section of the positive active material prepared according to Comparative Example 2 after milling with FIB.

FIG. 2B is the result of obtaining the SAED (Selected Area Diffraction Pattern) pattern for area 1 in FIG. 2A.

FIG. 2C is the result of obtaining the SAED (Selected Area Diffraction Pattern) pattern for area 1 in FIG. 2A.

FIG. 3A shows the cross-section of the positive active material prepared according to Comparative Example 3 after milling with FIB.

FIG. 3B is the result of obtaining the SAED (Selected Area Diffraction Pattern) pattern for area 1 in FIG. 3A.

FIG. 3C is the result of obtaining the SAED (Selected Area Diffraction Pattern) pattern for area 1 in FIG. 3A.

## DETAILED DESCRIPTION OF THE EMBODIMENTS

The terms first, second and third are used to describe, but are not limited to, various parts, components, regions, layers and/or sections. These terms are used only to distinguish one part, component, region, layer or section from another part, component, region, layer or section. Accordingly, a first part, component, region, layer or section described below may be referred to as a second part, component, region, layer or section.

The terminology used herein is for the purpose of referring only to specific exemplary embodiments, and is not intended to limit the present invention. As used herein, the singular forms also include the plural forms unless the phrases clearly indicate the opposite. The meaning of "comprising" as used in the specification specifies a particular characteristic, region, integer, step, operation, element and/or component, and it does not exclude the presence or absence of another characteristic, region, integer, step, operation, element and/or component.

When a part is referred to as being "on" or "above" another part, it may be directly on or above the other part, or the other part may be involved in between. In contrast, when a part refers to being "directly on" another part, there is no intervening part in between.

Although not defined differently, all terms including technical and scientific terms used herein have the same meaning as commonly understood by a person of an ordinary skill in the technical field to which the present invention belongs. Commonly used terms defined in the dictionary are additionally interpreted as having a meaning consistent with the related art literature and the presently disclosed content, and unless defined, are not interpreted in an ideal or very formal meaning.

In addition, unless otherwise specified, % means wt%, and 1 ppm is 0.0001 wt%.

Hereinafter, an exemplary embodiment of the present invention will be described in detail so that a person of an ordinary skill in the technical field to which the present invention belongs can easily implement. As those skilled in the art would realize, the described embodiments may be modified in various different ways.

A positive active material for a lithium secondary battery according to an exemplary embodiment includes lithium metal oxide particles including lithium, nickel, cobalt, manganese and doping elements.

The lithium metal oxide particle consists of secondary particles including primary particles.

In the present exemplary embodiment, the lithium metal oxide particle may include a first domain and a second domain therein, and more specifically, the primary particle may include a first domain and a second domain.

Here, the domain means each region having a separate and independent crystal structure within the lithium metal oxide particle, that is, within the primary particle.

In the present exemplary embodiment, since a plurality of domains are included in the lithium metal oxide as described above, a stable structure can be maintained because the total number of domain regions is maintained even if some crystal structures are changed according to the movement of Li during charging and discharging.

The doping elements include Zr, Al, Ti and B.

In order to secure cycle-life and various electrochemical performances by doping lithium metal oxide, it is important to select a doping element. Doping elements known to date include, for example, mono-valent ions such as $Ag^+$ and $Na^+$ and multi-valent ions of more than divalent ions such as $Co^{2+}$, $Cu^{2+}$, $Mg^{2+}$, $Zn^{2+}$, $Ba^{2+}$, $Al^{3+}$, $Fe^{3+}$, $Cr^{3+}$, $Ga^{3+}$, $Zr^{4+}$,

and $Ti^{4+}$. Each of these elements has a different effect on the cycle-life and output characteristics of the battery.

In the present exemplary embodiment, by including Zr, Al, Ti and B among these doping elements, room temperature and high temperature cycle-life characteristic and thermal stability are improved while securing high capacity, and initial resistance characteristic and resistance increasing rate are significantly reduced.

Specifically, when $Ti^{4+}$ is doped into the NCM layered structure, it is possible to stabilize the structure of the positive electrode active material by suppressing the movement of $Ni^{2+}$ to the Li site.

In addition, $Al^{3+}$ suppresses the deterioration of the layered structure into the spinel structure due to the migration of Al ions to the tetragonal lattice site. The layered structure facilitates intercalation/deintercalation of Li ions, but the spinel structure does not facilitate the movement of Li ions.

Since $Zr^{4+}$ occupies the Li site, $Zr^{4+}$ acts as a kind of filler, and it relieves the contraction of the lithium ion path during the charging and discharging process, resulting in the stabilization of the layered structure. This phenomenon can increase the cycle characteristic by reducing the cation mixing and increasing the lithium diffusion coefficient.

In the case of doping B (Boron) together with the doping element, the initial resistance can be reduced by reducing the grain size during sintering of the positive electrode active material. In addition, it is possible to increase the cycle-life characteristic and thermal decomposition temperature.

That is, the positive active material of the present exemplary embodiment can exhibit a synergistic effect because it contains at least four doping elements together, unlike single element doping.

In the present exemplary embodiment, the doping amount of the Zr is 0.2 mol% to 0.5 mol%, more specifically, 0.25 mol% to 0.45 mol% or 0.3 mol% to 0.4 mol% with respect to 100 mol% of nickel, cobalt, manganese and doping element. When the doping amount of Zr satisfies the range, excellent room temperature and high temperature cycle-life characteristics and thermal stability can be secured, and the initial resistance value can be reduced.

The Al doping amount may be 0.5 mol% to 1.2 mol%, more specifically, 0.7 mol% to 1.1 mol% or 0.8 mol% to 1.0 mol%, based on 100 mol% of nickel, cobalt, manganese and doping element. When the Al doping amount satisfies the range, it is possible to secure high capacity and simultaneously improve thermal stability and cycle-life characteristics, and reduce resistance increase rate and average leakage current.

The doping amount of the Ti may be 0.05 mol% to 0.13 mol%, more specifically, 0.07 mol% to 0.12 mol% or 0.08 mol% to 0.11 mol% with respect to 100 mol% of nickel, cobalt, manganese and the doping element . When the Ti doping amount satisfies the range, excellent discharge capacity and efficiency can be secured, room temperature and high temperature cycle-life characteristics can be improved, and resistance increase rate and average leakage current value can be reduced.

The doping amount of the B may be 0.25 mol% to 1.25 mol%, more specifically, 0.4 mol% to 1.2 mol% or 0.5 mol% to 1.1 mol% based on 100 mol% of nickel, cobalt, manganese and doping element. When the doping amount of B satisfies the range, the initial resistance value can be reduced because the grain size is reduced during sintering of the positive electrode active material, and the room temperature and high temperature cycle-life characteristic and thermal decomposition temperature can be increased.

As such, since the positive active material of the present exemplary embodiment contains Zr, Al, Ti and B as doping elements, the lithium secondary battery to which it is applied shows excellent discharge capacity and simultaneously, improved initial efficiency, excellent room temperature and high temperature cycle-life characteristic. In addition, it can significantly reduce initial resistance, resistance increase rate, average leakage current, heating peak temperature and heating value.

This effect is obtained when Zr, Al, Ti and B quaternary doping elements are used, and if any one of them is not included, desired physical properties cannot be obtained.

Meanwhile, in the present exemplary embodiment, the content of nickel in the metal in the lithium metal oxide may be 80 mol% or more, more specifically 85 mol% or more or 90 mol% or more.

As in the present exemplary embodiment, when the content of nickel among metals in lithium metal oxide is 80% or more, a positive active material having a high-power characteristic can be implemented. Since the positive active material of the present exemplary embodiment having such a composition increases the energy density per volume, it is possible to improve the capacity of the battery to which it is applied, and it is also suitable for use for electric vehicles.

In the present exemplary embodiment, the crystal grain size of the lithium metal oxide particles may be in the range of 127 nm to 139 nm. When the grain size is 127 nm or more, high-capacity can be secured, residual lithium can be significantly reduced, and resistance characteristic and storage characteristics at a high temperature can be improved. In addition, when the grain size is 139 nm or less, the cycle-life characteristic can be improved. That is, when the grain size satisfies the range, both cycle-life and electrochemical characteristics are improved because it indicates that the crystallization of the positive electrode active material is properly made.

When measuring the X-ray diffraction pattern of the positive electrode active material of the present exemplary embodiment, the ratio of the peak intensity of the (003) plane to the peak intensity of the (104) plane, I(003)/I(104), may be in the range of 1.210 to 1.230.

In general, the peak intensity value means a height value of a peak or an integrated area value obtained by integrating a peak area, and in the present exemplary embodiment, the peak intensity value means a peak area value.

When the peak intensity ratio I(003)/I(104) is included in the range, structural stabilization is improved without reducing the capacity, and the thermal safety of the positive electrode active material can be improved.

In addition, the peak intensity ratio of I(003)/I(104) is a cation mixing index, when the I(003)/I(104) value decreases, the initial capacity and rate characteristic of the positive electrode active material may be deteriorated. However, in the present exemplary embodiment, I(003)/I(104) satisfies the range of 1.210 to 1.230, and an excellent positive electrode active material having the capacity and rate characteristics can implement.

In addition, the positive active material may have an R-factor value expressed by Equation 1 below, 0.510 to 0.524 range when measuring an X-ray diffraction pattern.

[Equation 1]

$$R\text{-factor} = \{I(006)+I(102)\}/I(101)$$

A decrease in the R-factor value promotes crystal grain enlargement in a positive electrode active material with a high Ni content, causing a decrease in the electrochemical performance of a lithium secondary battery to which it is applied. Therefore, when the positive active material has an appropriate range R-factor, it means that a lithium secondary battery with excellent performance can be realized.

On the other hand, the positive electrode active material of the present exemplary embodiment may have a bi-modal form in which large particles and small particles are mixed. The large particle may have an average particle diameter D50 in the range of 10 $\mu$m to 20 $\mu$m, and the small particle may have an average particle diameter D50 of 3 $\mu$m to 7 $\mu$m. In this case, the large particle and the small particle may also be in the form of a secondary particle in which at least one primary particle is assembled. In addition, the mixing ratio of large particles and small particles may be 50 to 80 wt% of the large particles based on the entire 100 wt%. An energy density can be improved due to this bimodal particle distribution.

In an exemplary embodiment, the positive electrode active material may further include a coating layer positioned on the lithium metal oxide particle surface. The coating layer may include aluminum, aluminum oxide, lithium aluminum oxide, boron, boron oxide, lithium boron oxide, tungsten oxide, lithium tungsten oxide or combination thereof. However, this is only an example, and various coating materials used for the positive electrode active material may be used. In addition, the content and thickness of the coating layer can be appropriately adjusted, and there is no need to specifically limit it.

In another exemplary embodiment of the present invention, a lithium secondary battery including a positive electrode comprising a positive active material according to an embodiment of the present invention described above, a negative electrode including a negative active material, and an electrolyte positioned between the positive electrode and the negative electrode, is provided.

The description related to the positive active material will be omitted because it is the same as the above-described an exemplary embodiment of the present invention.

In an embodiment, the positive electrode active material layer may further include a binder and a conductive material.

The binder serves to attach the positive electrode active material particles well to each other, and to attach the positive electrode active material to the current collector well.

The conductive material is used to impart conductivity to the electrode, and any material may be used as long as it does not cause chemical change in the battery to be configured and is an electron conductive material.

The negative electrode includes a current collector and a negative electrode active material layer disposed on the current collector.

The negative electrode active material may include a material that reversibly intercalates/deintercalates lithium ions, a lithium metal, a lithium metal alloy, a material capable of doping/dedoping lithium, or a transition metal oxide.

As a material capable of reversibly intercalating/deintercalating lithium ions, for example, a carbon material, that is, a carbon-based negative electrode active material generally used in lithium secondary batteries may be mentioned. An example of the carbon-based negative electrode active material may include crystalline carbon, amorphous carbon, or a mixture thereof.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

Materials capable of doping and dedoping the lithium include Si, $SiO_x$ (0 < x < 2), Si-Y alloy (the Y is an element selected from the group consisting of alkali metal, alkaline earth metal element, group 13 element, group 14 element, transition metal, rare earth, and combination thereof, not Si). Or, Sn, $SnO_2$, Sn-Y (the Y is an element selected from the group consisting of alkali metal, alkaline earth metal, group 13 element, group 14 element, transition metal, rare earth element and combination thereof, not Sn).

Examples of the transition metal oxide include vanadium oxide and lithium vanadium oxide. The negative electrode active material layer includes a negative electrode active material and a binder, and optionally a conductive material.

The binder improves binding properties of negative electrode active material particles with one another and with a current collector.

The conductive material is included to cathode conductivity and any electrically conductive material may be used as a conductive material unless it causes a chemical change.

The negative electrode current collector may include one selected from a copper foil, a nickel foil, a stainless-steel foil, a titanium foil, a nickel foam, a copper foam, a polymer substrate coated with a conductive metal, and a combination thereof.

The negative electrode and the positive electrode are prepared by mixing an active material, a conductive material and a binder in a solvent to prepare an active material composition, and applying this composition to a current collector. Since such an electrode manufacturing method is widely known in the art, a detailed description will be omitted in this specification. As the solvent, N-methylpyrrolidone, etc. can be used, but is not limited thereto.

The non-aqueous electrolyte includes a non-aqueous organic solvent and a lithium salt.

The non-aqueous organic solvent serves as a medium for transmitting ions taking part in the electrochemical reaction of a lithium secondary battery.

The lithium salt dissolved in an organic solvent supplies a battery with lithium ions, basically operates the lithium secondary battery, and improves transportation of the lithium ions between the cathode and negative electrode.

In addition, the lithium secondary battery may include a separator between a positive electrode and a negative electrode. In addition, the separator may include polyethylene, polypropylene, polyvinylidene fluoride, and multi-layers thereof such as a polyethylene/polypropylene double-layered separator, a polyethylene/polypropylene/polyethylene triple-layered separator, or a polypropylene/polyethylene/polypropylene triple-layered separator.

A lithium secondary battery can be classified into a lithium ion battery, a lithium ion polymer battery, and a lithium polymer battery according to the type of separator and electrolyte used, and can be classified into cylindrical, prismatic, coin-type, pouch-type, etc. according to the shape. According to the size, it can be divided into bulk type and thin film type. The structure and manufacturing method of these batteries are widely known in this field, so a detailed description will be omitted.

Hereinafter, an exemplary embodiment of the present invention will be described in detail. However, this is provided as an example, and the present invention is not limited thereto, and the present invention is only defined by the scope of claims to be described later.

**Preparation Example 1** - **Preparation of large particle and small particle precursor**

Large particle positive electrode active material precursor and small particle positive electrode active material precursor were prepared by general co-precipitation method.

In the production of large and small diameter precursors, $NiSO_4 \cdot 6H_2O$ was used as the nickel raw material, $CoSO_4 \cdot 7H_2O$ was used as the cobalt raw material, and $MnSO_4 \cdot H_2O$ was used as the manganese raw material. These raw materials were dissolved in distilled water to prepare an aqueous metal salt solution.

Next, after preparing the co-precipitation reactor, $N_2$ was purged to prevent oxidation of metal ions during the co-precipitation reaction, and the temperature of the reactor was maintained at 50 °C.

$NH_4(OH)$ was added as a chelating agent to the co-precipitation reactor, and NaOH was used for pH control.

The precipitate obtained according to the co-precipitation process was filtered, washed with distilled water, and dried in an oven at 100 °C for 24 hours to prepare a large precursor and a small precursor.

Specifically, the large precursor had a composition of $(Ni_{0.92}CO_{0.04}Mn_{0.04})(OH)_2$ and was grown so that the average particle size diameter was 14.3 $\mu$m. In addition, the small precursor was prepared so that the diameter of the average particle size was 4.5 $\mu$m with the same composition.

**Exemplary embodiment 1 - Zr, Al, Ti, B quaternary element doping**

**(1) Manufacture of positive electrode active material**

For each of the large precursor and the small precursor prepared in preparation example 1, 1.07 moles of $LiOH \cdot H_2O$ (Samjeon Chemical, battery grade) and a doping raw material were uniformly mixed to prepare a mixture based on 1 mole of the precursor. After sintering the mixture at high temperature, large and small positive electrode active materials having the same composition was prepared, respectively.

At this time, $ZrO_2$ (Aldrich, 3N), $Al_2O_3$ (Aldrich, 3N), $TiO_2$ (Aldrich, 3N) and $H_3BO_3$ (Aldrich, 3N) were used as doping materials.

The doping composition was expressed as $M = Ni_{0.92}C0_{0.04}Mn_{0.04}$ based on $LiNi_{0.92}C0_{0.04}Mno_{0.04}O_2$ undoped with metal elements, and the amount of doping raw materials was adjusted so that the sum of M and doped amounts was 1 mol. That is, it has a structure of $Li(M)_{1-x}(D)_xO_2$ (M=NCM, D=doping material). The composition doped with a quaternary element in the large and small-diameter active material of exemplary embodiment 1 is $Li(M)_{0.986}Zr_{0.0035}A_{0.0085}Ti_{0.001}B_{0.001}O_2$.

The sintering condition was maintained at 480°C for 5h, then at 740-780°C for 15h, and the temperature increasing speed was 5°C/min.

A bi-modal positive electrode active material was manufactured by uniformly mixing the sintered large and small positive electrode active material at a weight ratio of 80:20 (large particle : small particle).

## (2) Manufacturing of coin-type half-cell

Specifically, the positive active material, polyvinylidene fluoride binder (trade name: KF1100) and Denka black conductive material are mixed in a weight ratio of 92.5:3.5:4, and the mixture is mixed with N-methyl-2-pyrrolidone (N-Methyl-2-pyrrolidone) solvent so that the solid content is about 30 wt%. Accordingly, a positive electrode active material slurry was prepared.

The slurry was coated on aluminum foil (Al foil, thickness: 15 $\mu$m), which is a positive electrode current collector, using a doctor blade, dried and rolled to prepare a positive electrode. The loading amount of the positive electrode was about 14.6 mg/cm$^2$, and the rolling density was about 3.1 g/cm$^3$.

The positive electrode, lithium metal negative electrode (thickness 300 $\mu$m, MTI), electrolyte solution, and a polypropylene separator were used to prepare a 2032 coin-type half-cell by a conventional method. The electrolyte solution was used by dissolving 1M $LiPF_6$ in a mixed solvent of ethylene carbonate, dimethyl carbonate and ethylmethyl carbonate (EMC) (mixing ratio EC:DMC:EMC=3:4:3 volume%).

## Comparative Example 1 - Preparation of positive active material doped only with Zr, Al, and Ti

### (1) Manufacture of positive electrode active material

Using the large precursor and the small precursor prepared in Preparation Example 1, except that only $ZrO_2$ (Aldrich, 3N), $Al_2O_3$ (Aldrich, 3N) and $TiO_2$ (Aldrich, 3N) as doping raw materials, bimodal active materials were prepared by the same method.

The composition of the large and small active material in Comparative Example 1 is $Li(M)_{0.987}Zr_{0.0035}Al_{0.0085}Ti_{0.001}O_2$.

## (2) Manufacturing of coin-type half-cell

A 2032 coin-type half-cell was manufactured in the same manner as in (2) of Exemplary embodiment 1 using the positive active material prepared in (1) of Comparative Example 1.

## Comparative Example 2 - Secondary particles including layered structure primary particle and cubic structure primary particle

### (1) Manufacture of positive electrode active material

A positive active material having the same composition as Comparative Example 1 was prepared.

However, a water washing process was added after sintering, and water washing was performed for about 30 minutes using distilled water at a solid-liquid ratio of 1:1.

## (2) Manufacturing of coin-type half-cell

A 2032 coin-type half-cell was manufactured by the same method as in (2) of Exemplary embodiment 1 using the positive active material prepared in (1) of Comparative Example 2.

## Comparative Example 3 - Secondary particles containing layered primary particles

### (1) Manufacture of positive electrode active material

Bimodal positive electrode active materials were prepared in the same method as in Exemplary embodiment 1, except that only ZrO2 (Aldrich, 3N) and $Al_2O_3$ (Aldrich, 3N) were used as doping raw materials using the large precursor and the small precursor prepared in Preparation Example 1.

The composition of the large and small active material in Comparative Example 3 is $Li(M)_{0.988}Zr_{0.0035}Al_{0.0085}O_2$.

**(2) Manufacturing of coin-type half-cell**

A 2032 coin-type half-cell was manufactured by the same method as in (2) of Exemplary embodiment 1 using the positive active material prepared in (1) of Comparative Example 3.

**Exemplary embodiment 2 - Change the B doping amount to 0.0025 mol**

**(1) Manufacture of positive electrode active material**

Using the large precursor and the small precursor prepared in Preparation Example 1, a bimodal positive electrode active material was manufactured in the same manner as in Exemplary embodiment 1, except that the doping amount of B was 0.0025 mol.

**(2) Manufacturing of coin-type half-cell**

A 2032 coin-type half-cell was manufactured by the same method as in (2) of Exemplary embodiment 1 by using the positive electrode active material manufactured in (1) of Exemplary embodiment 2.

**Exemplary embodiment 3 - Change the B doping amount to 0.005 mol**

**(1) Manufacture of positive active material**

Using the large precursor and the small precursor prepared in Preparation Example 1, a bimodal positive electrode active material was manufactured in the same manner as in Exemplary embodiment 1, except that the doping amount of B was 0.005 mol.

**(2) Manufacturing of coin-type half-cell**

A 2032 coin-type half-cell was manufactured by the same method as (2) of Exemplary Embodiment 1 by using the positive electrode active material manufactured in (1) of Exemplary Embodiment 3.

**Exemplary embodiment 4 - Change the B doping amount to 0.0075 mol**

**(1) Manufacture of positive electrode active material**

Using the large precursor and the small precursor prepared in Preparation Example 1, a bimodal positive electrode active material was manufactured in the same manner as in Exemplary embodiment 1, except that the doping amount of B was 0.0075 mol.

**(2) Manufacturing of coin-type half-cell**

A 2032 coin-type half-cell was manufactured by the same method as in (2) of exemplary embodiment 1 by using the positive active material manufactured in (1) of exemplary embodiment 4.

**Exemplary embodiment 5 - Change the B doping amount to 0.01 mol**

**(1) Manufacture of positive electrode active material**

Using the large precursor and the small precursor prepared in Preparation Example 1, a bimodal positive electrode active material was manufactured in the same manner as in exemplary embodiment 1, except that the doping amount of B was 0.01 mol.

**(2) Manufacturing of coin-type half-cell**

A 2032 coin-type half-cell was manufactured by the same method as in (2) of exemplary embodiment 1 using the positive active material manufactured in (1) of exemplary embodiment 5.

**Exemplary embodiment 6** - **Change the B doping amount to 0.0125 mol**

**(1) Manufacture of positive electrode active material**

Using the large precursor and the small precursor prepared in Preparation Example 1, a bimodal positive electrode active material was manufactured in the same manner as in exemplary embodiment 1, except that the doping amount of B was 0.0125 mol.

**(2) Manufacturing of coin-type half-cell**

A 2032 coin-type half-cell was manufactured by the same method as in (2) of exemplary embodiment 1 using the positive active material manufactured in (1) of exemplary embodiment 6.

**Reference Example 1** - **Change the B doping amount to 0.015 mol**

**(1) Manufacture of positive electrode active material**

Using the large precursor and the small precursor prepared in Preparation Example 1, a bimodal positive electrode active material was manufactured in the same manner as in exemplary embodiment 1, except that the doping amount of B was 0.015 mol.

**(2) Manufacturing of coin-type half-cell**

A 2032 coin-type half-cell was manufactured in the same manner as in (2) of exemplary embodiment 1 using the positive active material prepared in (1) of Reference Example 1.

**Reference Example 2** - **Change the B doping amount to 0.02 mol**

**(1) Manufacture of positive electrode active material**

Using the large precursor and the small precursor prepared in Preparation Example 1, a bimodal positive electrode active material was manufactured in the same manner as in Exemplary embodiment 1, except that the doping amount of B was set to 0.02 mol.

**(2) Manufacturing of coin-type half-cell**

A 2032 coin-type half-cell was manufactured by the same method as in (2) of Exemplary embodiment 1 using the positive active material prepared in (1) of Reference Example 2.

**Exemplary embodiment 7 - Change the Zr doping amount to 0.002mol**

**(1) Manufacture of positive electrode active material**

Using the large precursor and the small precursor prepared in Preparation Example 1, a bimodal positive electrode active material was prepared by the same method as in Exemplary embodiment 1, except only that in the fixed state where Al 0.0085 mol, Ti 0.001 mol, and B 0.005 mol, the Zr doping amount was 0.002 mol,

**(2) Manufacturing of coin-type half-cell**

A 2032 coin-type half-cell was manufactured by the same method as (2) of Exemplary embodiment 1 by using the positive electrode active material manufactured in (1) of Exemplary embodiment 7.

**Exemplary embodiment 8** - **Change the Zr doping amount to 0.005 mol**

**(1) Manufacture of positive electrode active material**

Using the large precursor and the small precursor prepared in Preparation Example 1, a bimodal positive electrode active material was prepared by the same method in Exemplary embodiment 1, except that only in the fixed state where Al 0.0085 mol, Ti 0.001 mol, and B 0.005 mol, the Zr doping amount was 0.005 mol.

**(2) Manufacturing of coin-type half-cell**

A 2032 coin-type half-cell was manufactured by the same method as (2) of Exemplary embodiment 1 by using the positive electrode active material manufactured in (1) of Exemplary embodiment 8.

**Reference Example 3 - Change the Zr doping amount to 0.006 mol**

**(1) Manufacture of positive electrode active material**

Using the large precursor and the small precursor prepared in Preparation Example 1, a bimodal positive electrode active material was prepared by the same method in Exemplary embodiment 1, except only that in the fixed state where Al 0.0085 mol, Ti 0.001 mol and B 0.005 mol, the Zr doping amount was 0.006 mol,

**(2) Manufacturing of coin-type half-cell**

A 2032 coin-type half-cell was manufactured in the same manner as in (2) of Exemplary embodiment 1 by using the positive active material prepared in (1) of Reference Example 3.

**Exemplary embodiment 9 - Al doping amount is changed to 0.005 mol**

**(1) Manufacture of positive electrode active material**

Using the large particle diameter precursor and the small particle diameter precursor prepared in Preparation Example 1, a bimodal positive electrode active material was prepared by the same method in Exemplary embodiment 1, except only that in the state where Zr 0.0035 mole, Ti 0.001 mole, and B 0.005 mole were fixed, the Al doping amount was 0.005 mole.

**(2) Manufacturing of coin-type half-cell**

A 2032 coin-type half-cell was manufactured by the same method as (2) of Exemplary embodiment 1 using the positive active material manufactured in (1) of Exemplary embodiment 9.

**Exemplary embodiment 10 - Change the Al doping amount to 0.012mol**

**(1) Manufacture of positive electrode active material**

Using the large particle diameter precursor and the small particle diameter precursor prepared in Preparation Example 1, a bimodal positive electrode active material was prepared by the same method in Exemplary embodiment 1, except only that in the state where Zr 0.0035 mole, Ti 0.001 mole, and B 0.005 mole were fixed, the Al doping amount was 0.012 mole.

**(2) Manufacturing of coin-type half-cell**

A 2032 coin-type half-cell was manufactured by the same method as (2) of Exemplary embodiment 1 using the positive active material manufactured in (1) of Exemplary embodiment 10.

**Reference Example 4 - Change the Al doping amount to 0.015 mol**

**(1) Manufacture of positive electrode active material**

Using the large particle diameter precursor and the small particle diameter precursor prepared in Preparation Example 1, a bimodal positive electrode active material was prepared by the same method in Exemplary embodiment 1, except only that in the state where Zr 0.0035 mole, Ti 0.001 mole, and B 0.005 mole were fixed, the Al doping amount was 0.015 mole.

## (2) Manufacturing of coin-type half-cell

A 2032 coin-type half-cell was manufactured by the same method as in (2) of Exemplary embodiment 1 using the positive active material prepared in (1) of Reference Example 4.

## Exemplary embodiment 11 - Change the Ti doping amount to 0.0005 mol

### (1) Manufacture of positive electrode active material

Using the large particle diameter precursor and the small particle diameter precursor prepared in Preparation Example 1, a bimodal positive electrode active material was prepared by the same method in Exemplary embodiment 1, except only that in the state where Zr 0.0035 mole, Al 0.0085 mole, and B 0.005 mole were fixed, the Ti doping amount was 0.005 mole.

### (2) Manufacturing of coin-type half-cell

A 2032 coin-type half-cell was manufactured by the same method as (2) of Exemplary embodiment 1 using the positive active material manufactured in (1) of Exemplary embodiment 11.

## Exemplary embodiment 12 - Change the Ti doping amount to 0.0008 mol

### (1) Manufacture of positive electrode active material

Using the large particle diameter precursor and the small particle diameter precursor prepared in Preparation Example 1, a bimodal positive electrode active material was prepared by the same method in Exemplary embodiment 1, except only that in the state where Zr 0.0035 mole, Al 0.0085 mole, and B 0.005 mole were fixed, the Ti doping amount was 0.0013 mole.

### (2) Manufacturing of coin-type half-cell

A 2032 coin-type half-cell was manufactured by the same method as (2) of Exemplary embodiment 1 using the positive active material manufactured in (1) of Exemplary embodiment 12.

## Reference Example 5 - Change the Ti doping amount to 0.004 mol

### (1) Manufacture of positive electrode active material

Using the large particle diameter precursor and the small particle diameter precursor prepared in Preparation Example 1, a bimodal positive electrode active material was prepared by the same method in Exemplary embodiment 1, except only that in the state where Zr 0.0035 mole, Al 0.0085 mole, and B 0.005 mole were fixed, the Ti doping amount was 0.004 mole.

### (2) Manufacturing of coin-type half-cell

A 2032 coin-type half-cell was manufactured in the same manner as in (2) of Exemplary embodiment 1 using the positive active material prepared in (1) of Reference Example 5.

## (Experimental Example 1) X-ray diffraction evaluation

The lattice constants of the positive active materials prepared according to the exemplary embodiment 1 to 12, Comparative Examples 1 to 3 and Reference Examples 1 to 5 were obtained by X-ray diffraction measurement using CuKα rays. The measured a-axis length and c-axis length are shown in Table 1 below. In addition, the distance ratio (c/a axis ratio) between the crystal axes is also shown in Table 1 below.

In addition, the crystal grain size of the active material was measured and shown in Table 1 below.

Next, an X-ray diffraction measurement test was performed on the positive electrode active material, and peak areas of planes 003 and 104 were obtained. CuK$\alpha$ was used as the target line, and X'Pert powder (PANalytical corp.) XRD equipment was used. Measurement conditions were $2\theta$ = 10° to 130°, scan speed (°/S) = 0.328, and step size was 0.026°/step. I(003)/I(104) was obtained from this result, and the result is shown in Table 1 below.

For crystallographic consideration by doping, Rietveld analysis was performed using high score plus Rietveld software, and the results are shown in Table 1 below as R-factors.

The following method was used for XRD measurement for Rietveld analysis. CuK$\alpha$ was used as the target line, and X'Pert powder (PANalytical corp.) XRD equipment was used. Measurement conditions were $2\theta$ = 10° to 130°, scan speed (°/S) = 0.328, and step size was 0.026°/step. From this, the strengths of 006, 102 and 101 were obtained, and the R-factor was calculated according to Equation 1 below using the results. The results are shown in Table 1 below.

In this result, as the GOF (Goodness of Fit) value is calculated within 1.2, it can be said that the Rietveld structural analysis result is a reliable number.

[Equation 1]

$$R\text{-factor} = \{I(006) + I(102)\}/I(101)$$

(Table 1)

| division | Composition of large and small active material | a(Å) | c(Å) | c/a | Crystalline size(nm) | I(003)/I(10 4) | R-factor | GOF |
|---|---|---|---|---|---|---|---|---|
| Comparative Example 1 | $Li(M)_{0.987}Zr_{0.0035}Al_{0.0085}Ti_{0.001}O_2$ | 2.8737 | 14.2023 | 4.9422 | 140 | 1.2124 | 0.525 | 1.145 |
| Comparative Example 2 | $Li(M)_{0.987}Zr_{0.0035}Al_{0.0085}Ti_{0.001}O_2$ | 2.8738 | 14.1925 | 4.9386 | 138 | 1.1734 | 0.533 | 1.135 |
| Comparative Example 3 | $Li(M)_{0.988}Zr_{0.0035}Al_{0.0085}O_2$ | 2.8743 | 14.2011 | 4.9407 | 137 | 1.2213 | 0.521 | 1.133 |
| exemplary embodiment 1 | $Li(M)_{0.986}Zr_{0.0035}Al_{0.0085}Ti_{0.001}B_{0.001}O_2$ | 2.8739 | 14.2014 | 4.9415 | 138.3 | 1.2283 | 0.524 | 1.135 |
| exemplary embodiment 2 | $Li(M)_{0.9845}Zr_{0.0035}Al_{0.0085}Ti_{0.001}B_{0.0025}O_2$ | 2.8739 | 14.201 | 4.9414 | 135.5 | 1.2281 | 0.522 | 1.148 |
| exemplary embodiment 3 | $Li(M)_{0.982}Zr_{0.0035}Al_{0.0085}Ti_{0.001}B_{0.005}O_2$ | 2.8738 | 14.2001 | 4.9412 | 133.8 | 1.2252 | 0.522 | 1.146 |
| exemplary embodiment 4 | $Li(M)_{0.9795}Zr_{0.0035}Al_{0.0085}Ti_{0.001}B_{0.0075}O_2$ | 2.8741 | 14.2008 | 4.941 | 132.8 | 1.225 | 0.522 | 1.149 |
| exemplary embodiment 5 | $Li(M)_{0.977}Zr_{0.0035}Al_{0.0085}Ti_{0.001}B_{0.01}O_2$ | 2.8745 | 14.2005 | 4.9402 | 130.2 | 1.228 | 0.522 | 1.151 |
| exemplary embodiment 6 | $Li(M)_{0.9745}Zr_{0.0035}Al_{0.0085}Ti_{0.001}B_{0.0125}O_2$ | 2.874 | 14.2002 | 4.9409 | 128.9 | 1.2285 | 0.523 | 1.152 |
| exemplary embodiment 7 | $Li(M)_{0.872}Zr_{0.0035}Al_{0.0085}Ti_{0.001}B_{0.015}O_2$ | 2.8737 | 14.2009 | 4.9417 | 128.2 | 1.2251 | 0.522 | 1.137 |
| exemplary embodiment 8 | $Li(M)_{0.967}Zr_{0.0035}Al_{0.0085}Ti_{0.001}B_{0.02}O_2$ | 2.8737 | 14.2002 | 4.9414 | 127.3 | 1.2223 | 0.522 | 1.133 |

Referring to Table 1, it can be seen that the factor values representing the crystal structure analyzed by XRD change according to the doping element and the doping amount.

The a factor did not change significantly with the increase in the B doping amount, but it was found that the c-axis decreased slightly during the B doping.

On the other hand, when B is doped, it can be seen that the crystal grain size is reduced. Specifically, as in Comparative Example 1, in the case of the positive active material doped with only ternary elements such as Zr, Al and Ti, the grain size was 140 nm. On the other hand, it can be seen that the positive electrode active material of Exemplary embodiment 1 to 8 in which B is additionally doped to the ternary element has a grain size reduced to less than 140 nm.

This grain size is an indicator that can confirm whether the crystallization is performed properly. That is, when the crystal grain size is around 130 nm as in the positive active material of Exemplary embodiment 1 to 8 in Table 1, crystallization is properly performed and cycle-life and other electrochemical characteristics are greatly improved. When referring to these results, it can be seen that B doping affects the grain size.

The cation mixing index, I(003)/I(104), increased during B doping. That is, in all the positive active materials of Exemplary embodiments 1 to 8 doped with Zr, Al and Ti with B, the I(003)/I(104) value represents 1.22 or more, and the cation mixing is reduced during B doping.

In addition, it can be seen that the R-factor value in the case of exemplary embodiments 1 to 8 in which B is doped together, is also reduced when compared with Comparative Example 1 in which only Zr, Al and Ti are doped. In other words, it can be confirmed once again that B doping has a positive effect on the performance of the positive electrode active material.

**(Experimental Example 2) Evaluation of electrochemical performance**

**(1) Evaluation of capacity**

After aging the coin-type half-cells manufactured according to exemplary embodiment 1 to 6, Comparative Example 1 to 3, and Reference Examples 1 to 2 at room temperature 25 °C for 10 hours, charge and discharge test is carried out.

For capacity evaluation, 205 mAh/g was used as a standard capacity, and CC/CV 2.5-4.25V, 1/20C cut-off was applied for charge and discharge conditions. An initial capacity was performed under 0.1C charge/0.1C discharge and 0.2C charge/0.2C discharge conditions.

The room temperature cycle characteristic was measured 30 times at room temperature 25°C, and the high temperature cycle characteristic was measured 30 times at high temperature 45°C with 0.3C charge/0.3C discharge condition, and then the 30th capacity ratio to the first capacity was measured. The results are shown in Table 2, Table 4, Table 6, and Table 8 below.

**(2) Resistance characteristic measurement**

High temperature initial resistance (DC internal resistance: DC-IR (Direct current internal resistance)) was measured by the following method. At 45°C, charge the battery at constant current-constant voltage 2.5V to 4.25V, 1/20C cut-off condition, perform 0.2C charge / 0.2 discharge once. After application of the discharge current at 4.25V charged 100%, the voltage value was measured after 60 seconds, and calculated. The results are shown in Table 2b, Table 3b, Table 4b, and Table 5b below.

The resistance increase rate is measured by measuring the resistance after 30 cycles compared to the resistance initially measured at high temperature 45°C (high temperature initial resistance), and converting the increase rate into percentage (%). The result is shown in Table 3 below.

Average leakage current measures the current generation during 120 hours when the half-cell is maintained at 4.7V at a high temperature of 55°C. The average value was calculated, and the results are shown in Table 3, Table 5, Table 7, and Table 9 below.

**(3) Evaluation of thermal stability**

For Differential Scanning Calorimetry (DSC), after charging the half-cell to 4.25V in the initial 0.1C charging condition, the half-cell is disassembled. Thereafter, only the positive electrode was obtained separately, and the positive electrode was prepared by washing it 5 times with dimethyl carbonate. After impregnation of the washed positive electrode in a crucible for DSC with electrolyte solution, the temperature was raised to 265°C and the change in heat quantity was measured using a DSC instrument (Mettler toledo's DSC1 star system). The obtained DSC peak temperature and calorific value results are shown in Table 3, Table 5, Table 7, and Table 9 below. DSC peak temperature indicates the temperature at which the exothermic peak appeared.

(Table 2)

| Division | Composition of large and small active material | Discharge capacity (mAh/g) | Initial efficiency (%) | room temperature cycle-life (%) | high temperature cycle-life (%) |
|---|---|---|---|---|---|
| Comparative Example 1 | $Li(M)_{0.987}Zr_{0.0035}Al_{0.0085}Ti_{0.001}O_2$ | 219.1 | 90.5 | 92.3 | 83.7 |
| Comparative Example 2 | $Li(M)_{0.987}Zr_{0.0035}Al_{0.0085}Ti_{0.001}O_2$ | 210.5 | 87.1 | 87.2 | 78.5 |
| Comparative Example 3 | $Li(M)_{0.988}Zr_{0.0035}Al_{0.0085}O_2$ | 220.4 | 91.3 | 90.4 | 82.1 |
| exemplary embodiment 1 | $Li(M)_{0.986}Zr_{0.0035}Al_{0.0085}Ti_{0.001}B_{0.001}O_2$ | 221.1 | 91.2 | 92.8 | 84.2 |
| exemplary embodiment 2 | $Li(M)_{0.9845}Zr_{0.0035}Al_{0.0085}Ti_{0.001}B_{0.0025}O_2$ | 222.8 | 91.5 | 93.9 | 86.5 |
| exemplary embodiment 3 | $Li(M)_{0.982}Zr_{0.0035}Al_{0.0085}Ti_{0.01}B_{0.005}O_2$ | 222 | 91.7 | 94.2 | 87.1 |
| exemplary embodiment 4 | $Li(M)_{0.9795}Zr_{0.0035}Al_{0.0085}Ti_{0.001}B_{0.0075}O_2$ | 222.1 | 91.3 | 94.6 | 87.4 |
| exemplary embodiment 5 | $Li(M)_{0.977}Zr_{0.0035}Al_{0.0085}Ti_{0.001}B_{0.01}O_2$ | 222.8 | 91.4 | 94.5 | 87.1 |
| exemplary embodiment 6 | $Li(M)_{0.9745}Zr_{0.0035}Al_{0.0085}Ti_{0.001}B_{0.0125}O_2$ | 221 | 90.9 | 93.1 | 86.7 |
| Reference Example 1 | $Li(M)_{0.972}Zr_{0.0035}Al_{0.0085}Ti_{0.001}B_{0.015}O_2$ | 218.5 | 90.5 | 92.2 | 85.3 |
| Reference Example 2 | $Li(M)_{0.967}Zr_{0.0035}Al_{0.0085}Ti_{0.001}B_{0.02}O_2$ | 213.3 | 87.5 | 88.2 | 82 |

(Table 3)

| Division | Composition of large and small active material | room temperature initial resistance ($\Omega$) | Resistance increase rate (%) | Average leakage current (mA) | DSC peak temperature (°C) | Calorific value (J/g) |
|---|---|---|---|---|---|---|
| Comparative Example 1 | $Li(M)_{0.987}Zr_{0.0035}Al_{0.0085}Ti_{0.001}O_2$ | 30.3 | 156.7 | 0.86 | 217.3 | 1,950 |
| Comparative Example 2 | $Li(M)_{0.987}Zr_{0.0035}Al_{0.0085}Ti_{0.001}O_2$ | 45.5 | 303.2 | 0.76 | 215.5 | 2,200 |
| Comparative Example 3 | $Li(M)_{0.988}Zr_{0.0035}Al_{0.0085}O_2$ | 35.5 | 120.3 | 0.45 | 220.1 | 1,560 |
| exemplary embodiment 1 | $Li(M)_{0.986}Zr_{0.0035}Al_{0.0085}Ti_{0.001},B_{0.001}O_2$ | 28.8 | 131.2 | 0.65 | 222.1 | 1,750 |

(continued)

| Division | Composition of large and small active material | room temperature initial resistance ($\Omega$) | Resistance increase rate (%) | Average leakage current (mA) | DSC peak temperature (°C) | Calorific value (J/g) |
|---|---|---|---|---|---|---|
| exemplary embodiment 2 | Li $(M)_{0.9845}Zr_{0.0035}Al_{0.0085}Ti_{0.001}B_{0.0025}O_2$ | 24.9 | 89.1 | 0.28 | 228.7 | 1,485 |
| exemplary embodiment 3 | Li $(M)_{0.982}Zr_{0.0035}Al_{0.0085}Ti_{0.001}B_{0.005}O_2$ | 24 | 87.1 | 0.22 | 230.8 | 1,418 |
| exemplary embodiment 4 | Li $(M)_{0.9795}Zr_{0.0035}Al_{0.0085}Ti_{0.001}B_{0.0075}O_2$ | 23.5 | 84.9 | 0.2 | 230.2 | 1,395 |
| exemplary embodiment 5 | Li $(M)_{0.977}Zr_{0.0035}Al_{0.0085}Ti_{0.001}B_{0.01}O_2$ | 23.8 | 84.8 | 0.21 | 232.5 | 1,380 |
| exemplary embodiment 6 | Li $(M)_{0.9745}Zr_{0.0035}Al_{0.0085}Ti_{0.001}B_{0.0125}O_2$ | 23.4 | 84.2 | 0.2 | 234.2 | 1,290 |
| Reference Example 1 | Li $(M)_{0.972}Zr_{0.0035}Al_{0.0085}Ti_{0.001}B_{0.015}O_2$ | 25.8 | 84.1 | 0.2 | 233.1 | 1,334 |
| Reference Example 2 | Li $(M)_{0.967}Zr_{0.0035}Al_{0.0085}Ti_{0.01}B_{0.02}O_2$ | 27.5 | 105.5 | 0.82 | 230.2 | 1,330 |

Table 2 and Table 3 are electrochemical characteristic measurement results for comparing the performance according to the content when B is doped.

Referring to Table 2 and Table 3, in Comparative Example 1 where B is not doped at all, the discharge capacity is 219.1mAh/g, high temperature cycle-life 83.7%, resistance increase rate 156.7%, average leakage current 0.86mA and DSC decomposition temperature 217.3 °C is indicated. On the other hand, compared with Comparative Example 1, it can be seen that in the case of exemplary embodiments 1 to 8 doped by adding B, the capacity, cycle-life and DSC decomposition temperature is increased, and room temperature initial resistance, resistance increase rate and calorific value is decreased.

For example, in the case of exemplary embodiment 3 in which B is doped by 0.005 mol, the discharge capacity is 222 mAh/g, high temperature cycle-life is 87.1%, room temperature initial resistance is 24 ohm, resistance increase rate is 87.1%, average leakage current is 0.22mA. This is greatly improved.

In particular, in the case of DSC thermal decomposition temperature indicating thermal stability, it can be seen that Exemplary embodiment 3 greatly increases to 230.8 °C, and as the calorific value is also reduced by 500J/g or more, it can be seen that the stability is significantly improved.

However, even when quaternary doping is performed as in Reference Examples 1 and 2, when the content of B exceeds 0.015 mol, the discharge capacity is reduced and simultaneously room temperature and high temperature cycle-life characteristic are also deteriorated. It can be confirmed that the doping amount of B in the present exemplary embodiment is the optimal range.

(Table 4)

| Division | Composition of large and small active material | Discharge capacity (mAh/g) | Initial efficiency (%) | room temperature cycle-life (%) | high temperature cycle-life (%) |
|---|---|---|---|---|---|
| exemplary embodiment7 | Li $(M)_{0.9835}Zr_{0.002}Al_{0.0085}Ti_{001}B_{0.005}O_2$ | 223.1 | 91.2 | 92.9 | 85.2 |
| exemplary embodiment3 | Li $(M)_{0.982}Zr_{0.0035}Al_{0.0085}Ti_{0.001}B_{0.005}O_2$ | 222.8 | 91.5 | 93.9 | 86.5 |

(continued)

| Division | Composition of large and small active material | Discharge capacity (mAh/g) | Initial efficiency (%) | room temperature cycle-life (%) | high temperature cycle-life (%) |
|---|---|---|---|---|---|
| exemplary embodiment8 | Li $(M)_{0.9805}Z_{0.005}Al_{0.0085}Ti_{0.001}B_{0.005}O_2$ | 221.7 | 90.9 | 95.1 | 86.8 |
| Reference Example 3 | Li $(M)_{0.9795}Zr_{0.006}Al_{0.0085}Ti_{0.001}B_{0.005}O_2$ | 197.3 | 87.2 | 95.2 | 85.5 |

(Table 5)

| Division | Composition of large and small active material | room temperature initial resistance ($\Omega$) | Resistance increase rate (%) | Average leakage current (mA) | DSC peak temperature (°C) | Calorific value (J/g) |
|---|---|---|---|---|---|---|
| exemplary embodiment7 | Li $(M)_{0.9835}Zr_{0.002}Al_{0.0085}Ti_{0.001}B_{0.005}O_2$ | 22.1 | 97.6 | 0.35 | 227.7 | 1,495 |
| exemplary embodiment3 | Li $(M)_{0.982}Zr_{0.0035}Al_{0.0085}Ti_{0.001}B_{0.005}O_2$ | 24.9 | 89.1 | 0.28 | 228.7 | 1,485 |
| exemplary embodiment8 | Li $(M)_{0.9805}Zr_{0.005}Al_{0.0085}Ti_{0.001}B_{0.005}O_2$ | 29.2 | 84.2 | 0.25 | 229.7 | 1,390 |
| Reference Example 3 | Li $(M)_{0.9795}Zr_{0.006}Al_{0.0085}Ti_{0.001}B_{0.005}O_2$ | 35.2 | 87.3 | 0.22 | 228.5 | 1,360 |

Table 4 and Table 5 are results of evaluating the electrochemical characteristics for the positive active material of exemplary embodiment 3, exemplary embodiment 7 to 8 and Reference Example 3. These show the results when only the doping amount of Zr was changed while Al was fixed at 0.0085 mol, Ti at 0.001 mol, and B at 0.005 mol.

Referring to Table 4 and Table 5, as the Zr doping amount gradually increased from 0.002 mol, it can be seen that the room temperature and high temperature cycle-life characteristic were increased, and the room temperature initial resistance, resistance increase rate and average leakage current were decreased.

However, even with quaternary doping, in the case of Reference Example 2 in which 0.006 mol of Zr was doped, the capacity was greatly reduced to 197.3 mAh/g, and the initial efficiency and room temperature initial resistance were also significantly deteriorated. Considering these results, it can be confirmed that the doping amount of Zr is the optimal range in the range presented in the present exemplary embodiment.

(Table 6)

| Division | Composition of large and small active material | Discharge capacity (mAh/g) | Initial efficiency (%) | room temperature cycle-life (%) | high temperature cycle-life (%) |
|---|---|---|---|---|---|
| exemplary embodiment9 | Li $(M)_{0.9855}Zr_{0.0035}Al_{0.005}Ti_{0.001}B_{0.005}O_2$ | 223.9 | 91.7 | 93.1 | 86.4 |
| exemplary embodiment3 | Li $(M)_{0.982}Zr_{0.0035}Al_{0.0085}Ti_{0.005}B_{O.005}O_2$ | 222.8 | 91.5 | 93.9 | 86.5 |
| exemplary embodiment10 | Li $(M)_{0.9785}Zr_{0.0035}Al_{0.012}Ti_{0.00}1B_{0.005}O_2$ | 220.3 | 91.6 | 93.8 | 86.7 |
| Reference Example 4 | Li $(M)_{0.9755}Zr_{0.0035}Al_{0.015}Ti_{0.001}B_{0.005}O_2$ | 216.6 | 91 | 92.9 | 85.8 |

(Table 7)

| Division | Composition of large and small active material | room temperature initial resistance ($\Omega$) | Resistance increase rate (%) | Average leakage current (mA) | DSC peak temperature (°C) | Calorific value (J/g) |
|---|---|---|---|---|---|---|
| exemplary embodiment 9 | Li $(M)_{0.9855}Zr_{0.0035}Al_{0.005}Ti_{0.005}B_{0.005}O_2$ | 24.8 | 88.7 | 0.27 | 223.2 | 1,557 |
| exemplary embodiment 3 | Li $(M)_{0.982}Zr_{0.0035}Al_{0.0085}Ti_{0.001}B_{0.005}O_2$ | 24.9 | 89.1 | 0.28 | 228.7 | 1,485 |
| exemplary embodiment 10 | Li $(M)_{0.9785}Zr_{0.0035}Al_{0.012}Ti_{0.001}B_{0.005}O_2$ | 23.9 | 87.6 | 0.25 | 229.1 | 1,295 |
| Reference Example 4 | Li $(M)_{0.9755}Zr_{0.0035}Al_{0.015}Ti_{0.001}B_{0.005}O_2$ | 24.2 | 88.1 | 0.19 | 230.1 | 1,124 |

Table 6 and Table 7 are results of evaluating the electrochemical characteristics for the positive active material of exemplary embodiment 3, exemplary embodiment 9 to 10 and Reference Example 4. Through these, it can be seen that the result of changing only the Al doping amount in the state where Zr 0.0035 mol, Ti 0.001 mol, and B 0.005 mol was fixed.

Referring to Table 6 and Table 7, it can be seen that as the Al content increases, the DSC peak temperature increases and the calorific value tends to decrease.

On the other hand, it can be confirmed that the positive active material of Reference Example 3 containing 0.015 mol of Al has a reduced high temperature cycle-life, and particularly has a significantly reduced capacity to 216.6 mAh/g.

Therefore, it can be confirmed that the Al doping amount is the optimal range in the present exemplary embodiment.

(Table 8)

| Division | Composition of large and small active material | Discharge capacity (mAh/g) | Initial efficiency (%) | room temperature cycle-life (%) | high temperature cycle-life (%) |
|---|---|---|---|---|---|
| exemplary embodiment11 | Li $(M)_{0.9825}Zr_{0.0035}Al_{0.0085}Ti_{0.0005}B_{0.005}O_2$ | 221.9 | 91.6 | 94 | 87.1 |
| exemplary embodiment3 | Li $(M)_{0.982}Zr_{0.0035}Al_{0.0085}Ti_{0.001}B_{0.005}O_2$ | 222.8 | 91.5 | 93.9 | 86.5 |
| exemplary embodiment12 | Li $(M)_{0.9817}Zr_{0.0035}Al_{0.0085}Ti_{0.0008}B_{0.005}O_2$ | 220.8 | 91.5 | 94.2 | 86.5 |
| Reference Example 5 | Li $(M)_{0.979}Zr_{0.0035}Al_{0.0085}Ti_{0.004}B_{0.005}O_2$ | 215.8 | 88.9 | 94.6 | 85.2 |

(Table 9)

| Division | Composition of large and small active material | room temperature initial resistance ($\Omega$) | Resistance increase rate (%) | Average leakage current (mA) | DSC peak temperature (°C) | Calorific value (J/g) |
|---|---|---|---|---|---|---|
| exemplary embodiment11 | $Li(M)_{0.9825}Zr_{0.0035}Al_{0.0085}Ti_{0.0005}B_{0.005}O_2$ | 25.3 | 110.2 | 0.21 | 229.1 | 1,479 |
| exemplary embodiment3 | $Li(M)_{0.982}Zr_{0.0035}Al_{0.0085}Ti_{0.001}B_{0.005}O_2$ | 24.9 | 89.1 | 0.28 | 228.7 | 1,485 |
| exemplary embodiment12 | $Li(M)_{0.9817}Zr_{0.0035}Al_{0.0085}Ti_{0.0008}B_{0.005}O_2$ | 24.5 | 88.9 | 0.27 | 228.9 | 1,470 |
| Reference Example 5 | $Li(M)_{0.979}Zr_{0.0035}Al_{0.0085}Ti_{0.004}B_{0.005}O_2$ | 28.6 | 95.8 | 0.32 | 230.2 | 1,512 |

Table 8 and Table 9 are results of evaluating the electrochemical characteristics for the positive active material of exemplary embodiment 3, exemplary embodiment 13, 14 and Reference Example 4. Through this, it can be seen that the result of changing only the doping amount of Ti while fixing 0.0035 mol of Zr, 0.0085 mol of Al, and 0.005 mol of B can be seen.

Referring to Table 8 and Table 9, as the Ti content increases from 0.0005 mol, it can be seen that the room temperature and high temperature cycle-life characteristic increase, and, in addition, the room temperature initial resistance, resistance increase rate and average leakage current decrease.

On the other hand, in the case of Reference Example 4 in which Ti was doped to 0.004 mol even with quaternary doping, the discharge capacity was greatly reduced to 215.8 mAh/g, and the initial efficiency was also reduced.

In addition, it can be seen that the room temperature initial resistance is also greatly increased to 28.6 ohm.

Considering these results, it can be confirmed that the doping amount of Ti is the optimal range in the range presented in the present exemplary embodiment.

**(Experimental Example 3) domain analysis**

After milling the positive electrode active material prepared according to exemplary embodiment 1 and Comparative Examples 2 to 3 using the FIB (Focused Ion Beam, Seiko 3050SE) method, the crystal structure was analyzed by STEM (Scanning Transmission Electron Microscopy, Jeol ARM200F).

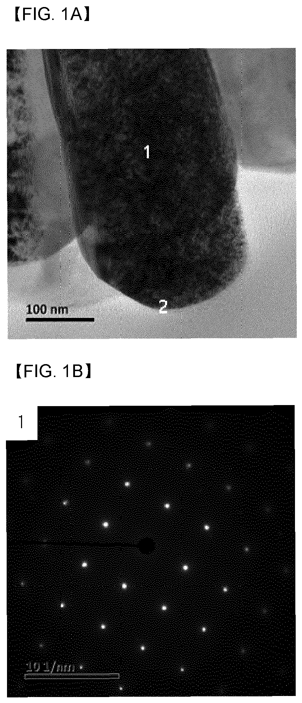

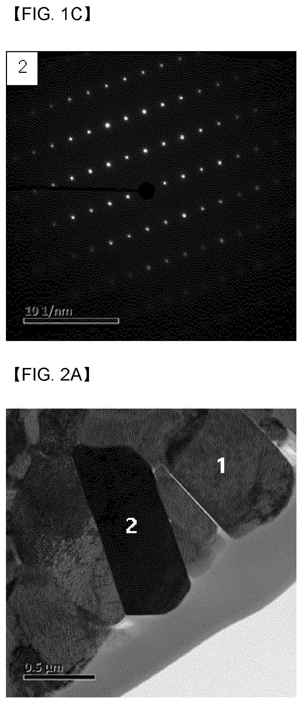

FIG. 1A shows the cross-section after milling the positive active material manufactured according to exemplary embodiment 1 with FIB. FIG. 1B and FIG. 1C is the results obtained by the SAED (Selected Area Diffraction Pattern) pattern for area 1 and area 2 are respectively shown in FIG. 1A.

Referring to FIG. 1A to FIG. 1C, a typical layered rhombohedral structure (a=b=0.28831nm, c=1.41991nm) was observed in region 1, and a cubic structure (a=b=c=0.835 nm) different from the layered structure in region 2 was observed.

That is, in the positive electrode active material manufactured according to exemplary embodiment 1, different crystal structures are observed in regions 1 and 2 included in one primary particle. From this, it can be confirmed that at least two or more domains, which are regions having separate independent crystal structures, exist within the primary particle.

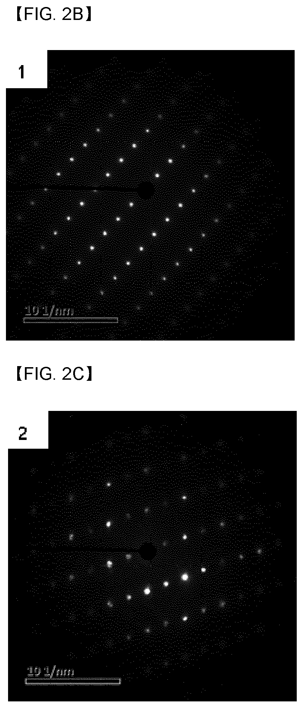

FIG. 2A shows the cross-section of the positive active material prepared according to Comparative Example 2 after milling with FIB. FIG. 2B and FIG. 2C is the results obtained by the SAED (Selected Area Diffraction Pattern) pattern for area 1 and area 2 in Fig. 2A, are respectively shown.

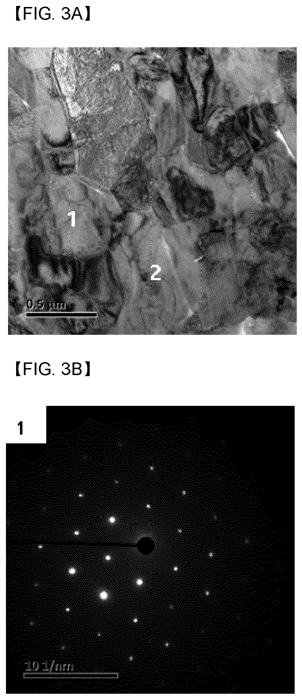

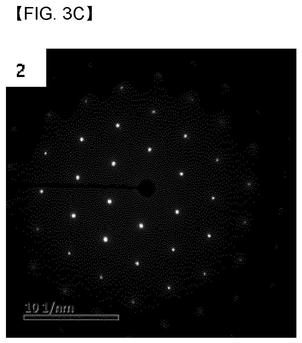

Also, FIG. 3A shows the cross-section of the positive active material prepared according to Comparative Example 3 after milling with FIB. FIG. 3B and FIG. 3C is the results obtained by the SAED (Selected Area Diffraction Pattern) pattern for area 1 and area 2 in FIG. 3A are respectively shown.

Referring to FIG. 2A to FIG. 2C, a rhombohedral structure was observed in region 1, and a cubic structure was observed in region 2. The positive active material of Comparative Example 2 includes a plurality of primary particles, some of which primary particles have a layered structure, and some of the primary particles have a cubic structure. As a result, it can be seen that the positive active material of Comparative Example 2 has a structure in which a plurality of primary particles including one domain are included, rather than two or more domains in the primary particle as in Example Embodiment 1.

Referring to FIG. 3A to FIG. 3C, a rhombohedral structure was observed in both regions 1 and 2. It can be seen that the positive active material of Comparative Example 3 includes a plurality of primary particles, and a plurality of primary particles all have a layered structure.

The present invention is not limited to the exemplary embodiments and can be manufactured in various different forms, and a person of an ordinary skill in the technical field to which the present invention belongs is without changing the technical idea or essential features of the present invention. It will be understood that the invention may be embodied in other specific forms. Therefore, it should be understood that the exemplary embodiments described above are exemplary in all respects and not restrictive.

**Claims**

1. A positive electrode active material for a lithium secondary battery, comprising:

   a lithium metal oxide particle comprising lithium, nickel, cobalt, manganese and doping elements; and
   a first domain and a second domain inside the lithium metal oxide particle, wherein the first and second domains are regions having separate and independent crystal structures within a primary particle,
   wherein the doping elements include Zr, Al, Ti and B.

2. The positive electrode active material of claim 1, wherein:
the lithium metal oxide particle consists of a secondary particle including primary particles.

3. The positive electrode active material of claim 1, wherein:
the first domain contains a layered structure.

4. The positive electrode active material of claim 1, wherein:
the second domain contains a cubic structure.

5. The positive electrode active material of claim 1, wherein:
the crystal grain size of the lithium metal oxide particle is in the range of 127nm to 139nm.

6. The positive electrode active material of claim 1, wherein:
the doping amount of Zr is 0.2 mol% to 0.5 mol% based on 100 mol% of nickel, cobalt, manganese and doping elements.

7. The positive electrode active material of claim 1, wherein:
the Al doping amount is 0.5 mol% to 1.2 mol%, based on 100 mol% of nickel, cobalt, manganese and doping elements.

8. The positive electrode active material of claim 1, wherein:
the doping amount of Ti is 0.05 mol% to 0.13 mol% based on 100 mol% of nickel, cobalt, manganese and doping elements.

9. The positive electrode active material of claim 1, wherein:
the edoping amount of B is 0.25 mol% to 1.25 mol% with respect to 100 mol% of nickel, cobalt, manganese and doping elements.

10. The positive electrode active material of claim 1, wherein:
the content of nickel in the metal in the lithium metal oxide particle is 80 mol% or more.

11. The positive electrode active material of claim 1, wherein:
when measuring the X-ray diffraction pattern of the positive electrode active material for the lithium secondary battery, I(003)/I(104), which is the ratio of the peak intensity of plane (003) to the peak intensity of plane (104), is in the range of 1.210 to 1.230.

12. The positive electrode active material of claim 1, wherein:
the positive electrode active material for the lithium secondary battery has an R-factor value of 0.510 to 0.524 as an equation 1 below, when measuring an X-ray diffraction pattern,

$$[\text{Equation 1}]$$

$$R\text{-factor} = \{I(006)+I(102)\}/I(101)$$

13. A lithium secondary battery comprising:

a positive electrode comprising the positive electrode active material of any one of claims 1 to 12;
a negative electrode; and
a non-aqueous electrolyte.

**Patentansprüche**

1. Aktivmaterial für positive Elektroden für eine wiederaufladbare Lithium-Sekundärbatterie, umfassend:

ein Lithium-Metalloxid-Partikel, enthaltend Lithium, Nickel, Kobalt, Mangan und Dotierungselemente; und
eine erste Region und eine zweite Region innerhalb des Lithium-Metalloxid-Partikels, wobei die erste und die zweite Region Bereiche mit separaten und unabhängigen Kristallstrukturen innerhalb eines primären Partikels sind,
wobei die Dotierungselemente Zr, Al, Ti und B beinhalten.

2. Aktivmaterial für positive Elektroden nach Anspruch 1, wobei:
das Lithium-Metalloxid-Partikel aus einem sekundären Partikel besteht, das primäre Partikel enthält.

3. Aktivmaterial für positive Elektroden nach Anspruch 1, wobei:
die erste Region eine Schichtstruktur enthält.

4. Aktivmaterial für positive Elektroden nach Anspruch 1, wobei:
die zweite Region eine kubische Struktur enthält.

5. Aktivmaterial für positive Elektroden nach Anspruch 1, wobei:
die Kristallkorngröße des Lithium-Metalloxid-Partikels im Bereich von 127 nm bis 139 nm liegt.

6. Aktivmaterial für positive Elektroden nach Anspruch 1, wobei:
die Dotierungsmenge von Zr 0,2 Mol-% bis 0,5 Mol-% basierend auf 100 Mol-% Nickel, Kobalt, Mangan und Dotierungselementen beträgt.

7. Aktivmaterial für positive Elektroden nach Anspruch 1, wobei:
die Dotierungsmenge von Al 0,5 Mol-% bis 1,2 Mol-% basierend auf 100 Mol-% Nickel, Kobalt, Mangan und Dotierungselementen beträgt.

8. Aktivmaterial für positive Elektroden nach Anspruch 1, wobei:
die Dotierungsmenge von Ti 0,05 Mol-% bis 0,13 Mol-% basierend auf 100 Mol-% Nickel, Kobalt, Mangan und Dotierungselementen beträgt.

9. Aktivmaterial für positive Elektroden nach Anspruch 1, wobei:
die Dotierungsmenge von B 0,25 Mol-% bis 1,25 Mol-% in Bezug auf 100 Mol-% Nickel, Kobalt, Mangan und Dotierungselementen beträgt.

10. Aktivmaterial für positive Elektroden nach Anspruch 1, wobei:
der Gehalt an Nickel in dem Metall in dem Lithium-Metalloxid-Partikel 80 Mol-% oder mehr beträgt.

11. Aktivmaterial für positive Elektroden nach Anspruch 1, wobei:
beim Messen des Röntgenbeugungsmusters des Aktivmaterials für positive Elektroden für die wiederaufladbare Lithium-Sekundärbatterie, I(003)/I(104), das das Verhältnis der Spitzenintensität der Ebene (003) zu der Spitzenintensität der Ebene (104) ist, im Bereich von 1,210 bis 1,230 liegt.

12. Aktivmaterial für positive Elektroden nach Anspruch 1, wobei:
das Aktivmaterial für positive Elektroden für die wiederaufladbare Lithium-Sekundärbatterie einen R-Faktorwert von 0,510 bis 0,524 als eine Gleichung 1 unten aufweist, wenn ein Röntgenbeugungsmuster gemessen wird,

$$[\text{Gleichung 1}]$$

$$\text{R-Faktor} = \{I(006) + I(102)\}/I(101)$$

13. Wiederaufladbare Lithium-Sekundärbatterie, umfassend:

eine positive Elektrode, umfassend das Aktivmaterial für positive Elektroden nach einem der Ansprüche 1 bis 12;
eine negative Elektrode; und
einen nicht wässrigen Elektrolyten.

**Revendications**

1. Matériau actif d'électrode positive pour une batterie secondaire au lithium, comprenant :

une particule d'oxyde métallique de lithium comprenant du lithium, du nickel, du cobalt, du manganèse et des éléments dopants ; et

un premier domaine et un second domaine à l'intérieur de la particule d'oxyde métallique de lithium, dans lequel les premier et second domaines sont des régions présentant des structures cristallines séparées et indépendantes à l'intérieur d'une particule primaire,

dans lequel les éléments dopants comprennent Zr, Al, Ti et B.

2. Matériau actif d'électrode positive selon la revendication 1, dans lequel :
la particule d'oxyde métallique de lithium consiste en une particule secondaire comprenant des particules primaires.

3. Matériau actif d'électrode positive selon la revendication 1, dans lequel :
le premier domaine contient une structure stratifiée.

4. Matériau actif d'électrode positive selon la revendication 1, dans lequel :
le second domaine contient une structure cubique.

5. Matériau actif d'électrode positive selon la revendication 1, dans lequel :
la taille de grain cristallin de la particule d'oxyde métallique de lithium est dans la plage de 127 nm à 139 nm.

6. Matériau actif d'électrode positive selon la revendication 1, dans lequel :
la quantité de dopage de Zr est de 0,2 % en mole à 0,5 % en mole sur la base de 100 % en mole de nickel, de cobalt, de manganèse et d'éléments dopants.

7. Matériau actif d'électrode positive selon la revendication 1, dans lequel :
la quantité de dopage d'Al est de 0,5 % en mole à 1,2 % en mole, sur la base de 100 % en mole de nickel, de cobalt, de manganèse et d'éléments dopants.

8. Matériau actif d'électrode positive selon la revendication 1, dans lequel :
la quantité de dopage de Ti est de 0,05 % en mole à 0,13 % en mole sur la base de 100 % en mole de nickel, de cobalt, de manganèse et d'éléments dopants.

9. Matériau actif d'électrode positive selon la revendication 1, dans lequel :
la quantité de dopage de B est de 0,25 % en mole à 1,25 % en mole par rapport à 100 % en mole de nickel, de cobalt, de manganèse et d'éléments dopants.

10. Matériau actif d'électrode positive selon la revendication 1, dans lequel :
la teneur en nickel dans le métal dans la particule d'oxyde métallique de lithium est de 80 % en mole ou plus.

11. Matériau actif d'électrode positive selon la revendication 1, dans lequel :
lors d'une mesure du motif de diffraction des rayons X du matériau actif d'électrode positive pour la batterie secondaire au lithium, I(003)/I(104), qui est le rapport de l'intensité de crête du plan (003) à l'intensité de crête du plan (104), est dans la plage de 1,210 à 1,230.

12. Matériau actif d'électrode positive selon la revendication 1, dans lequel :
le matériau actif d'électrode positive pour la batterie secondaire au lithium a une valeur de facteur R de 0,510 à 0,524 selon l'équation 1 ci-dessous, lors d'une mesure d'un motif de diffraction des rayons X,

[Équation 1]

$$\text{Facteur R} = \{I(006)+I(102)\}/I(101)$$

13. Batterie secondaire au lithium, comprenant :

une électrode positive comprenant le matériau actif d'électrode positive selon l'une quelconque des revendications 1 à 12 ;
une électrode négative ; et
un électrolyte non aqueux.

【FIG. 1A】

【FIG. 1B】

【FIG. 1C】

【FIG. 2A】

【FIG. 2B】

【FIG. 2C】

【FIG. 3A】

【FIG. 3B】

【FIG. 3C】

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020190172337
- KR 102007411 B1
- KR 20100068459 A